# EUROPÄISCHE PATENTANMELDUNG

(11) **EP 2 299 566 A1**
(43) Veröffentlichungstag der Anmeldung: **23.03.2011**
(21) Anmeldenummer: 09075430.0
(22) Anmeldetag: 17.09.2009
(51) Int. Cl.: H02K 21/44

(54) **Wind- oder Wasserenergieanlage**

(71) Anmelder: PM-Generators GmbH, 16835 Rüthnick (DE)
(72) Erfinder: Hein, Peter, 16835 Rüthnick (DE)
(74) Vertreter: Fischer, Uwe

(57) **Zusammenfassung**

Die Erfindung bezieht sich auf eine Wind- oder Wasserenergieanlage (10) zum Erzeugen elektrischer Energie mit mindestens einem Propeller (30) und mindestens einem Generator (60), der mindestens einen Rotor, mindestens einen Stator und mindestens ein einen magnetischen Fluss hervorrufenden magnetischen Kreis (120) umfasst.

Erfindungsgemäß ist vorgesehen, dass der mindestens eine magnetische Kreis zumindest einen statorseitigen Magneten (130, 131, 132) und zumindest eine statorseitige Spule (140, 141, 142), die von zumindest einem Teil des magnetischen Flusses des statorseitigen Magneten durchflossen wird, umfasst und der magnetische Kreis durch den Rotor geschlossen wird und der Rotor auf seiner dem Stator zugewandeten Oberfläche einen von seinem jeweiligen Rotationswinkel abhängigen magnetischen Widerstand (Rm) aufweist, so dass die Größe des magnetischen Flusses in der zumindest einen statorseitigen Spule von dem jeweiligen Rotationswinkel des Rotors abhängig ist und sich bei Rotation des Rotors ändert.

## Beschreibung

Die Erfindung bezieht sich auf eine Wind- oder Wasserenergieanlage mit den Merkmalen gemäß dem Oberbegriff des Anspruchs 1.

Die Gewinnung von Elektroenergie aus Wind erfolgt seit vielen Jahren mit Hilfe von immer größer werdenden Windrädern. Die erzielbaren Leistungen sind unter anderem vom Durchmesser des Windrades abhängig. Größere Leistungen bedeuten damit auch größere Windraddurchmesser und größere Propellerblattlängen. Da die Umfangsgeschwindigkeit der Propellerspitzen technisch begrenzt ist, ergeben sich immer geringere Drehzahlen.

Um für die Umwandlung der mechanischen Leistung in elektrische Energie kostengünstige Generatoren mit kleinen Abmessungen und geringem Gewicht verwenden zu können, werden üblicherweise Getriebe zwischen Propeller und elektrischem Generator angeordnet.

Der Erfindung liegt die Aufgabe zugrunde, eine Wind- oder Wasserenergieanlage anzugeben, die große elektrische Leistungen generieren kann, aber dennoch einen einfachen und leichten Aufbau aufweist.

Diese Aufgabe wird erfindungsgemäß durch eine Wind- oder Wasserenergieanlage mit den Merkmalen gemäß Patentanspruch 1 gelöst. Vorteilhafte Ausgestaltungen der erfindungsgemäßen Wind- oder Wasserenergieanlage sind in Unteransprüchen beschrieben.

Danach ist erfindungsgemäß eine Wind- oder Wasserenergieanlage zum Erzeugen elektrischer Energie mit mindestens einem Propeller und mindestens einem Generator vorgesehen, der mindestens einen Rotor, mindestens einen Stator und mindestens ein einen magnetischen Fluss hervorrufenden magnetischen Kreis umfasst. Der mindestens eine magnetische Kreis umfasst zumindest einen statorseitigen Magneten und zumindest eine statorseitige Spule, die von zumindest einem Teil des magnetischen Flusses des statorseitigen Magneten durchflossen wird. Der magnetische Kreis wird durch den Rotor geschlossen, wobei der Rotor auf seiner dem Stator zugewandeten Oberfläche einen von seinem jeweiligen Rotationswinkel abhängigen magnetischen Widerstand aufweist, so dass die Größe des magnetischen Flusses in der zumindest einen statorseitigen Spule von dem jeweiligen Rotationswinkel des Rotors abhängig ist und sich bei Rotation des Rotors ändert.

Ein wesentlicher Vorteil der erfindungsgemäßen Wind- oder Wasserenergieanlage ist darin zu sehen, dass alle Bauteile, die sich während des Betriebs des Generators erwärmen und ggf. gekühlt werden müssen, damit Grenztemperaturen nicht überschritten werden, im Stator des Generators angeordnet sind. Eine Kühlung des Stators von außen ist technisch relativ einfach und kostengünstig durchführbar. Die im Rotor angeordneten flussführenden Teile und Elemente, die sich durch Ummagnetisierung oder Wirbelströme erwärmen können und auch durch den Stator durch Wärmeübergang und/oder Strahlung erwärmt werden können, können bei der erfindungsgemäßen Wind- oder Wasserenergieanlage durch temperaturunkritische Teile gebildet werden, so dass sie keiner zusätzlichen Kühlung bedürfen. Mit anderen Worten besteht ein wesentlicher Vorteil der erfindungsgemäßen Wind- oder Wasserenergieanlage darin, dass lediglich Statorabschnitte gekühlt werden müssen und eine Kühlung des Rotors unterbleiben kann, selbst wenn sehr hohe elektrische Leistungen erzeugt werden.

Bei der Wind- oder Wasserenergieanlage handelt es sich vorzugsweise um eine Anlage, die eine Nennleistung von mindestens 1 kW aufweist. Eine solche Nennleistung ist in aller Regel erforderlich, um einen wirtschaftlichen Einsatz in Energieübertragungsnetzen zu ermöglichen.

Gemäß einer bevorzugten Ausgestaltung der Wind- oder Wasserenergieanlage ist vorgesehen, dass der Propeller mit dem Rotor des Generators drehfest verbunden ist. Auf ein Getriebe zwischen Rotor und Propeller kann somit verzichtet werden, so dass Gewicht und Kosten minimiert werden.

Vorzugsweise handelt es sich bei den statorseitigen Magneten um Permanentmagneten. Alternativ können anstelle von Permanentmagneten oder in Kombination mit Permanentmagneten auch Elektromagneten zur Erzeugung eines magnetischen Flusses eingesetzt werden.

Der Stator weist an seiner dem Rotor zugewandten Fläche, beispielsweise an seiner dem Rotor zugewandten Innenfläche, vorzugsweise eine Vielzahl an magnetischen Kreisen auf, die jeweils zumindest einen statorseitigen Magneten und jeweils zumindest eine statorseitige Spule umfassen und die jeweils durch den Rotor magnetisch geschlossen werden. Die statorseitigen Spulen lassen sich elektrisch zusammenschalten, um je nach der Ausführung des elektrischen Energieversorgungsnetzes, an das die Wind- oder Wasserenergieanlage angeschlossen ist, die entsprechenden Ströme oder Spannungen bereitstellen zu können.

Vorzugsweise ist die Anordnung der magnetischen Kreise auf dem Stator sowie die örtliche Verteilung des magnetischen Widerstands auf dem Rotor jeweils drehsymmetrisch.

Um eine mehrphasige, beispielsweise dreiphasige, Stromerzeugung zu ermöglichen, wird es als vorteilhaft angesehen, wenn der Drehsymmetriewinkel der Anordnung der magnetischen Kreise auf dem Stator und der Drehsymmetriewinkel der örtlichen Verteilung des magnetischen Widerstands auf dem Rotor unterschiedlich sind. Ein Drehsymmetriewinkelunterschied führt zu einer unterschiedlichen Polteilung auf dem Stator und dem Rotor, so dass sich elektrischer Strom für Mehrphasensysteme generieren lässt.

Selbstverständlich können der Drehsymmetriewinkel des Stators und der des Rotors auch identisch sein, wenn lediglich eine einzige Strom- und Spannungsphase erzeugt werden soll.

Vorzugsweise weist der Rotor auf seiner dem Stator zugewandten Oberfläche sich radial nach außen ersteckende Zähne auf. Mit Hilfe einer Zahnstruktur bzw. eines Zahnprofils lässt sich in besonders einfacher Weise ein vom jeweiligen Rotationswinkel des Rotors abhängiger magnetischer Widerstand an der Oberfläche des Rotors hervorrufen. Die Zähne an der Oberfläche des Rotors bestehen vorzugsweise aus einem Material mit einem geringen magnetischen Widerstand, also aus einem Material, das bei Anliegen eines magnetischen Feldes einen großen magnetischen Fluss hervorruft. Für die Zähne geeignetes Material ist beispielsweise ferromagnetisches Material, da dieses eine sehr hohe Permeabilitätszahl aufweist.

Der Zwischenraum zwischen benachbarten Zähnen des Stators kann beispielsweise ganz oder teilweise mit einem Material gefüllt sein, das einen größeren magnetischen Widerstand als das Material der Zähne aufweist. Beispielsweise kann der Zwischenraum zwischen benachbarten Zähnen mit einem Kunststoff oder einem Harz gefüllt sein.

Als besonders vorteilhaft wird es jedoch angesehen, wenn der Zwischenraum zwischen benachbarten Zähnen frei bleibt, da bei einer Rotation des Rotors freiliegende Zähne zu einer Luftverwirbelung im Luftspalt zwischen Stator und Rotor führen, wodurch eine Kühlung von Rotor und Stator hervorgerufen wird.

Besonders bevorzugt weist der statorseitige Abschnitt des mindestens einen magnetischen Kreises ein flussführendes Element auf, das durch die zumindest eine statorseitige Spule hindurchgeführt ist, wobei die Querschnittsfläche des flussführenden Elements im Spulenbereich kleiner als die Querschnittsfläche des statorseitigen Magneten ist. Bei einer solchen Ausgestaltung der Querschnitte kommt es zu einer Flusskonzentration im Bereich der statorseitigen Spule.

In entsprechender Weise kann vorgesehen sein, dass das flussführende statorseitige Element im Spulenbereich kleiner als im Bereich seiner Schenkelenden ist, mit denen es die Schnittstelle zum Rotor bildet. Auch bei dieser Ausgestaltung kommt es zu einer Flusskonzentration im Spulenbereich, wobei jedoch an der Schnittstelle zwischen Rotor und Stator das Luftspaltfeld beeinflusst werden kann.

Um die Feldlinien in einer möglichst optimalen Weise durch den Stator zu führen, können die statorseitigen Abschnitte der magnetischen Kreise jeweils mit mindestens einer magnetischen Flusssperre versehen sein, die einen größeren spezifischen magnetischen Widerstand als das übrige Material des jeweiligen statorseitigen Abschnitts aufweist. Derartige Flusssperren modifizieren den Feldlinienverlauf, da die Feldlinien die Flusssperren nicht oder nur schlecht passieren können und folglich (zumindest überwiegend) um die Flusssperren herum verlaufen müssen.

Darüber hinaus wird es als vorteilhaft angesehen, wenn der oder die statorseitigen Magnete im flussführenden statorseitigen Material eingebettet sind.

Für die Umwandlung der propellerdrehzahlabhängigen Generatorausgangsspannung und Ausgangsfrequenz werden vorzugsweise Umrichter verwendet.

Auch kann eine Schrägung der Rotorstruktur in eine Richtung oder - beispielsweise je zur Hälfte - in beide Richtungen (Pfeilschrägung) vorgesehen werden, um unter anderem Rastmomente zu reduzieren und die Schallerzeugung positiv zu beeinflussen.

Die Erfindung wird nachfolgend anhand von Ausführungsbeispielen näher erläutert; dabei zeigen beispielhaft
- Figur 1: ein Ausführungsbeispiel für eine Anordnung mit einer erfindungsgemäßen Windenergiean- lage, die an ein Energieübertragungsnetz angeschlossen ist,
- Figuren 2 bis 12: unterschiedliche Ausführungsbeispiele für einen Generator für die Windenergieanlage gemäß Figur 1,
- Figur 13: ein Ausführungsbeispiel für schräg verlau- fende Zähne eines Rotors für die Windener- gieanlage gemäß Figur 1 und
- Figur 14: ein weiteres Ausführungsbeispiel für schräg verlaufende Zähne eines Rotors für die Windenergieanlage gemäß Figur 1.

In den Figuren werden der Übersicht halber für identische oder vergleichbare Komponenten stets dieselben Bezugszeichen verwendet.

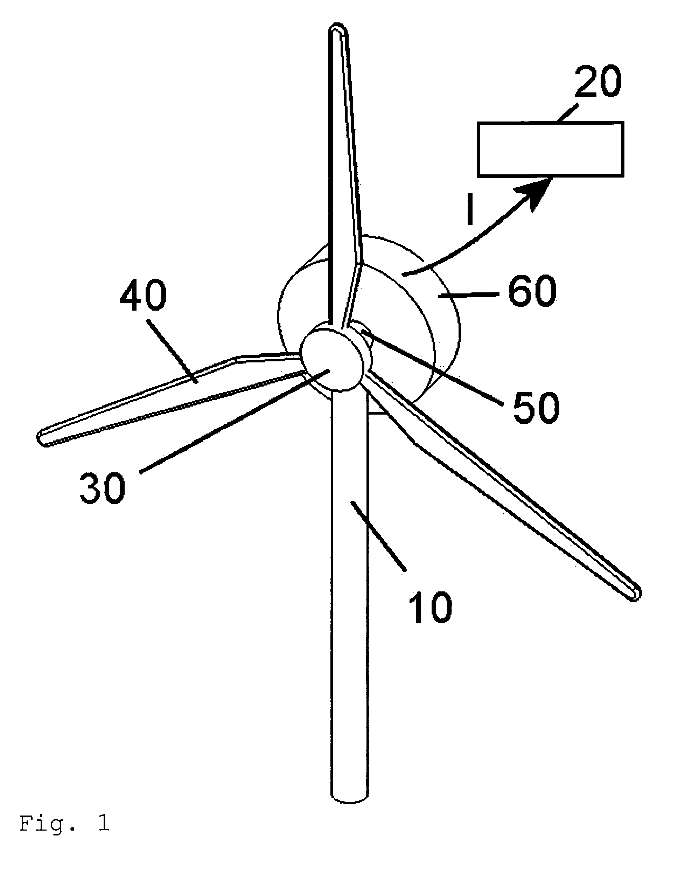

In der Figur 1 erkennt man eine Anordnung mit einer Windenergieanlage 10, die an ein Energieübertragungsnetz 20 angeschlossen ist. Die Windenergieanlage 10 wandelt Windenergie in elektrische Energie um und speist diese in das Energieübertragungsnetz 20 ein.

Die Windenergieanlage 10 umfasst einen Propeller 30, der mehrere Flügel 40 umfassen kann. Bei dem Ausführungsbeispiel gemäß der Figur 1 weist der Propeller 30 drei Flügel auf, selbstverständlich kann der Propeller 30 auch weniger oder mehr Flügel aufweisen.

Der Propeller 30 dreht sich um eine Achse 50, die mit einem Generator 60 der Windenergieanlage 10 in Verbindung steht. Wird durch Windeinwirkung der Propeller 30 in eine Rotationsbewegung um die Achse 50 versetzt, so wird der Generator 60 elektrischen Strom I erzeugen, der in das Energieübertragungsnetz 20 eingespeist wird.

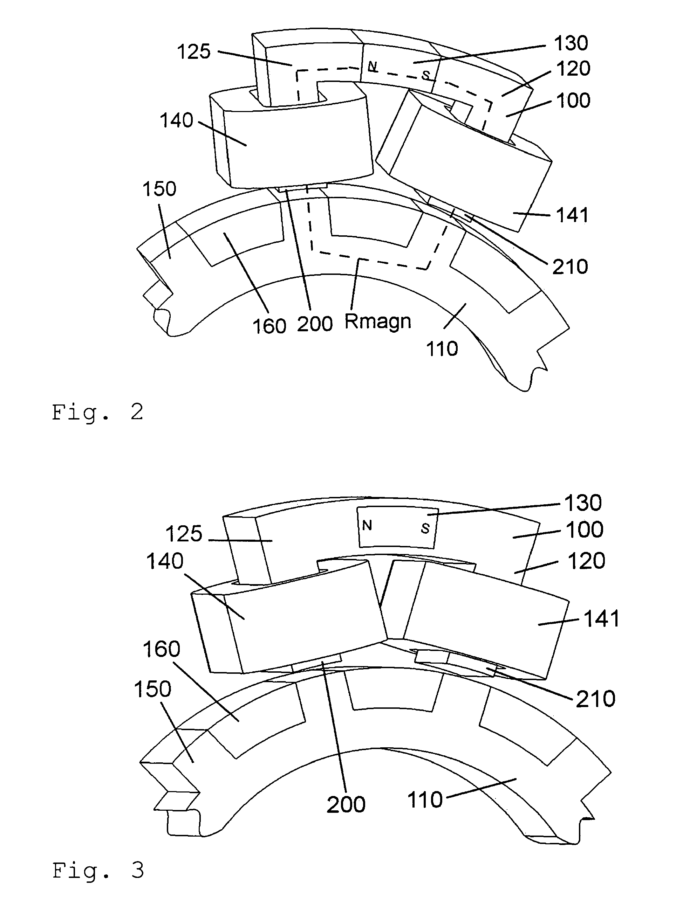

Die Figur 2 zeigt beispielhaft eine mögliche Ausführungsform für den Generator 60 in einer Teildarstellung. So erkannt man in der Figur 2 einen Abschnitt 100 eines nicht weiter dargestellten Stators des Generators 60. Außerdem ist ein Abschnitt 110 eines nicht weiter dargestellten Rotors des Generators 60 dargestellt.

In der Figur 2 mit dem Bezugszeichen 120 gekennzeichnet ist ein magnetischer Kreis, der einen statorseitigen Magneten 130 sowie zwei statorseitige Spulen 140 und 141 umfasst. Die statorseitigen Spulen 140 und 141 werden zumindest von einem Teil des magnetischen Flusses durchflossen, der von dem statorseitigen Magneten 130 erzeugt wird.

Der magnetische Kreis 120 umfasst darüber hinaus den Abschnitt 100 des Stators sowie den Abschnitt 110 des Rotors. Der Abschnitt 110 des Rotors bildet einen magnetischen Widerstand Rm, der von dem jeweiligen Rotationswinkel des Rotors relativ zum Stator abhängt. So lässt sich in der Figur 2 erkennen, dass der Abschnitt 110 Zähne 150 aufweist, die einen geringen magnetischen Widerstand bilden. Die Zähne 150 sind voneinander durch Spalte 160 getrennt, die einen gegenüber den Zähnen 150 größeren magnetischen Widerstand bilden. Wird nun der Rotor gegenüber dem Stator verdreht, so wird sich für den magnetischen Kreis 120 der gesamte magnetische Widerstand periodisch ändern und stets davon abhängen, welchen Drehwinkel der Rotor relativ zum Stator jeweils aufweist.

Geht man beispielhaft davon aus, dass der statorseitige Magnet 130 eine konstante magnetische Feldstärke erzeugt, so wird der magnetische Fluss, der durch den magnetischen Kreis 120 fließt, also von der jeweiligen Stellung des Rotors abhängen. Ist der Rotor so ausgerichtet, wie dies in der Figur 2 dargestellt ist, so wird der magnetische Fluss im magnetischen Kreis 120 maximal sein. Wird der Rotor demgegenüber verdreht, so wird der magnetische Fluss geringer werden. Aufgrund der Flussänderung in den beiden statorseitigen Spulen 140 und 141 wird es zu einer induzierten Spannung an den Leiterenden der beiden Spulen kommen, die als elektrische Energie an das Energieübertragungsnetz 20 gemäß Figur 1 abgegeben werden kann.

Wie sich der Figur 2 darüber hinaus entnehmen lässt, ist das flussführende statorseitige Element 125 im Querschnitt U-förmig ausgestaltet und weist zwei Schenkelenden 200 und 210 auf, die mit den Zähnen 150 bzw. den Spalten 160 im Abschnitt 110 des Rotors zusammenwirken. Die im Querschnitt U-förmige Ausgestaltung des flussführenden statorseitigen Elements 125 ist hier nur beispielhaft zu verstehen; selbstverständlich kann das flussführende statorseitige Element 125 auch andere Formgestaltungen aufweisen, wie weiter unten im Zusammenhang mit anderen Ausführungsbeispielen noch näher erläutert werden wird.

Um eine glatte Oberfläche des Rotors zu erreichen, können die Spalte 160 mit einem Material gefüllt werden, das einen anderen magnetischen Widerstand als die Zähne 150 aufweist. Beispielsweise können die Spalte 160 mit Kunststoff oder einem Harz gefüllt werden.

Als besonders vorteilhaft wird es jedoch angesehen, wenn die Spalte 160 lediglich mit Luft befüllt sind, so dass im Falle einer Rotation des Rotors eine Luftverwirbelung im Spalt zwischen Rotor und Stator auftritt und sowohl Rotor als auch Stator durch den Luftzug gekühlt werden.

Bei dem statorseitigen Magneten 130 kann es sich um einen Permanentmagneten oder um einen Elektromagneten handeln.

Die Figur 3 zeigt ein anderes Ausführungsbeispiel für eine mögliche Ausgestaltung des Generators 60 gemäß Figur 1. Bei dem Ausführungsbeispiel gemäß Figur 3 ist der statorseitige Magnet 130 im Material des flussführenden statorseitigen Elements 125 eingebettet. Im Übrigen entspricht das Ausführungsbeispiel gemäß Figur 3 dem Ausführungsbeispiel gemäß Figur 2.

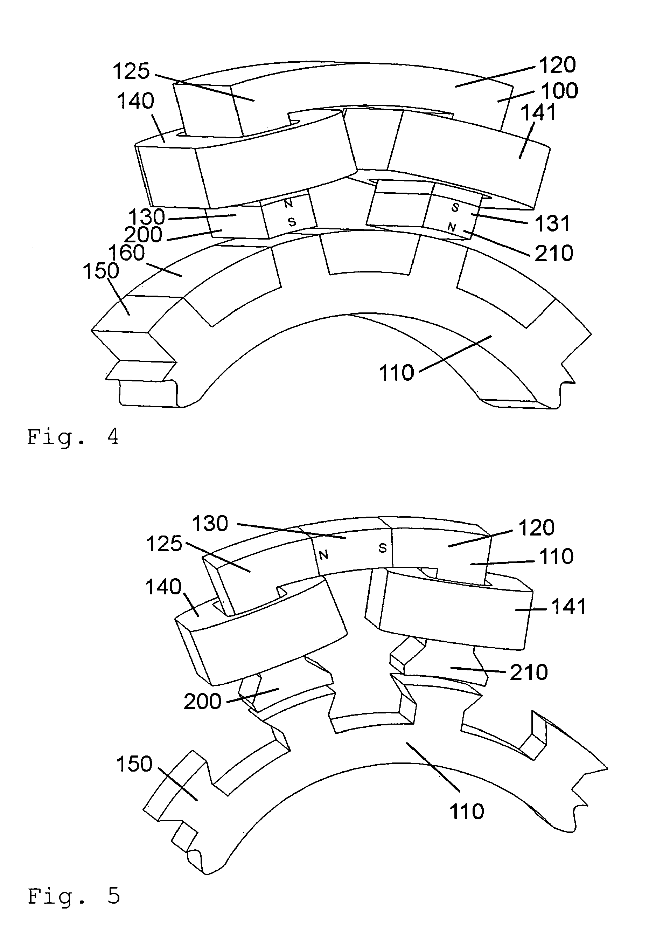

Die Figur 4 zeigt beispielhaft ein Ausführungsbeispiel, bei dem zwei statorseitige Magneten 130 und 131 vorhanden sind. Die beiden statorseitigen Magnete befinden sich an den Schenkelenden 200 und 210 des U-förmig geformten flussführenden statorseitigen Elements 125. Im Übrigen entspricht das Ausführungsbeispiel gemäß der Figur 4 dem Ausführungsbeispiel gemäß den Figuren 2 und 3.

In der Figur 5 ist ein Ausführungsbeispiel für einen Generator 60 gezeigt, bei dem das flussführende statorseitige Element 125 im Bereich der statorseitigen Spulen 140 und 141 eine kleinere Querschnittsfläche aufweist als im Bereich der Schenkelenden 200 und 210. Vorzugsweise ist die Formgestaltung der Zähne 150 im Rotor an die Formgestaltung und den Querschnitt der Schenkelenden 200 und 210 angepasst; beispielsweise sind die Querschnitte der Schenkelenden und die Querschnitte der Zähne 150 identisch.

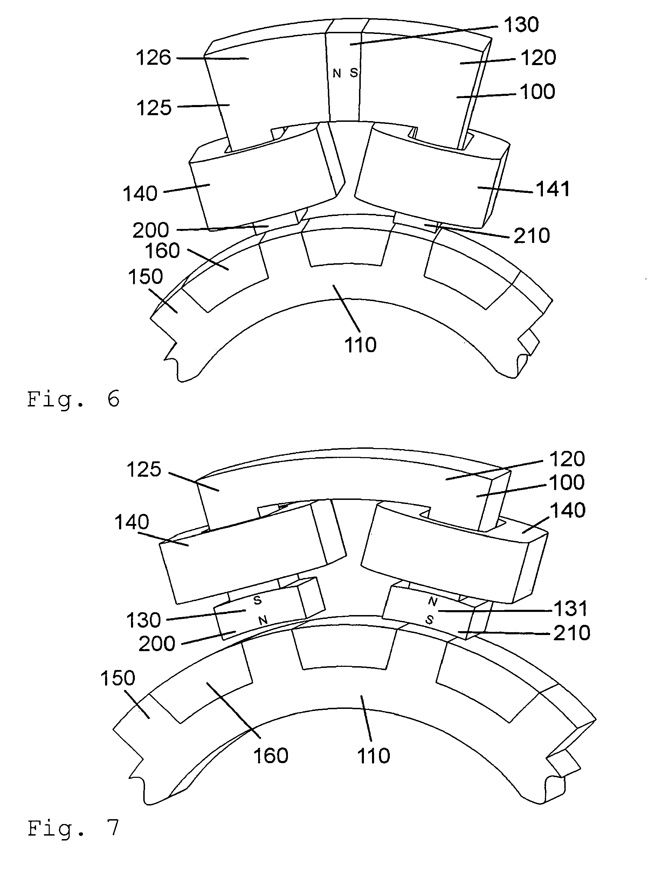

In der Figur 6 ist ein Ausführungsbeispiel für einen Generator 60 gezeigt, bei dem ebenfalls eine Flusskonzentration im Bereich der statorseitigen Spulen 140 und 141 vorgenommen ist. So lässt sich erkennen, dass das flussführende statorseitige Element 125 im Bereich der statorseitigen Spulen 140 und 141 einen geringeren Querschnitt aufweist als im Bogenbereich 126 des flussführenden statorseitigen Elements 125.

Die Figur 7 zeigt beispielhaft ein Ausführungsbeispiel, das eine Art Kombination der Ausführungsbeispiele gemäß den Figuren 4 und 5 darstellt. So erkennt man in der Figur 7 zwei statorseitige Magnete 130 und 131, die an den Schenkelenden 200 und 210 des flussführenden statorseitigen Elements 125 angeordnet sind. Außerdem ist ersichtlich, dass der Querschnitt der Schenkelenden 200 und 210 bzw. der Querschnitt der statorseitigen Magnete 130 und 131 größer ist als der Querschnitt des statorseitigen Elements 125 im Bereich der beiden statorseitigen Spulen 140 und 141.

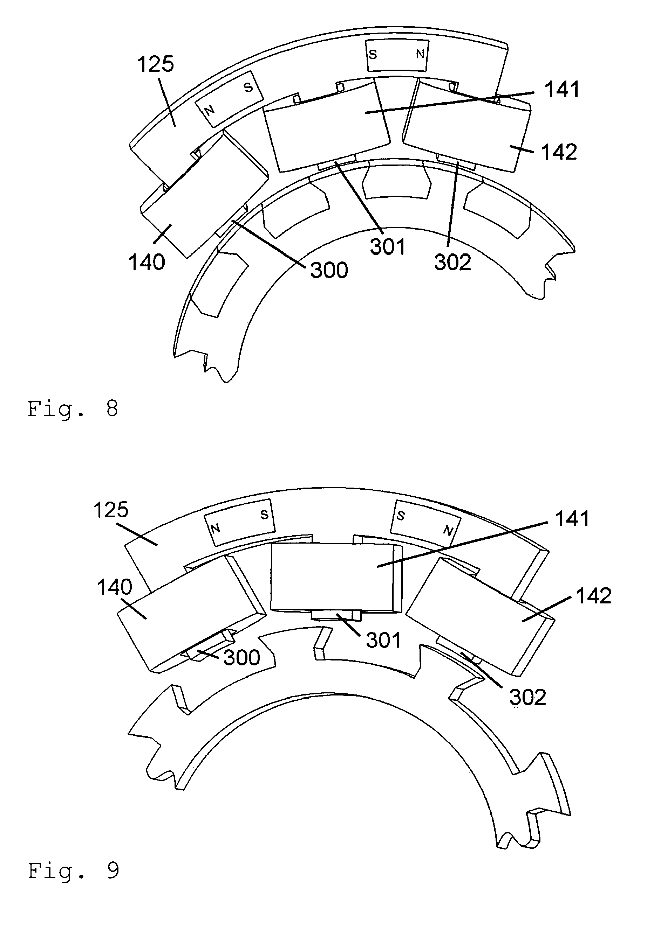

In der Figur 8 ist ein Ausführungsbeispiel für einen Generator 60 gezeigt, bei dem das flussführende statorseitige Element 125 kammartig bzw. kammförmig ausgestaltet ist. Vorzugsweise handelt es sich bei dem statorseitigen Element 125 um einen ringförmig geschlossenen Kamm mit radial nach innen ausgeformten Schenkeln, von denen in der Figur 8 beispielhaft drei mit dem Bezugszeichen 300, 301 und 302 gekennzeichnet sind.

Die Polteilung des Stators und die Polteilung des Rotors sind bei dem Ausführungsbeispiel gemäß Figur 8 identisch, so dass die in den statorseitigen Spulen 140, 141, 142 induzierten Spannungen entweder die gleiche Phase oder einen Phasenversatz von 180° aufweisen. Durch ein entsprechendes Verschalten der statorseitigen Spulen kann somit Strom und Spannung für ein einphasiges Energieübertragungssystem erzeugt werden.

Bei dem Ausführungsbeispiel gemäß Figur 9 ist das flussführende statorseitige Element 125 ebenfalls durch ein ringförmiges Element mit einer kammartigen Struktur gebildet, wie dies bereits im Zusammenhang mit der Figur 8 erläutert worden ist. Im Unterschied zu dem Ausführungsbeispiel gemäß Figur 8 ist jedoch die Polteilung zwischen Stator und Rotor nicht identisch, so dass die in den statorseitigen Spulen 140, 141 und 142 induzierten Spannungen eine Phasenversatz zueinander aufweisen, der von dem Polversatz zwischen Stator und Rotor abhängt. Durch einen solchen Versatz lassen sich mehrphasige, beispielsweise dreiphasige, Ströme und Spannungen für ein mehrphasiges, insbesondere dreiphasiges, Energieübertragungssystem generieren.

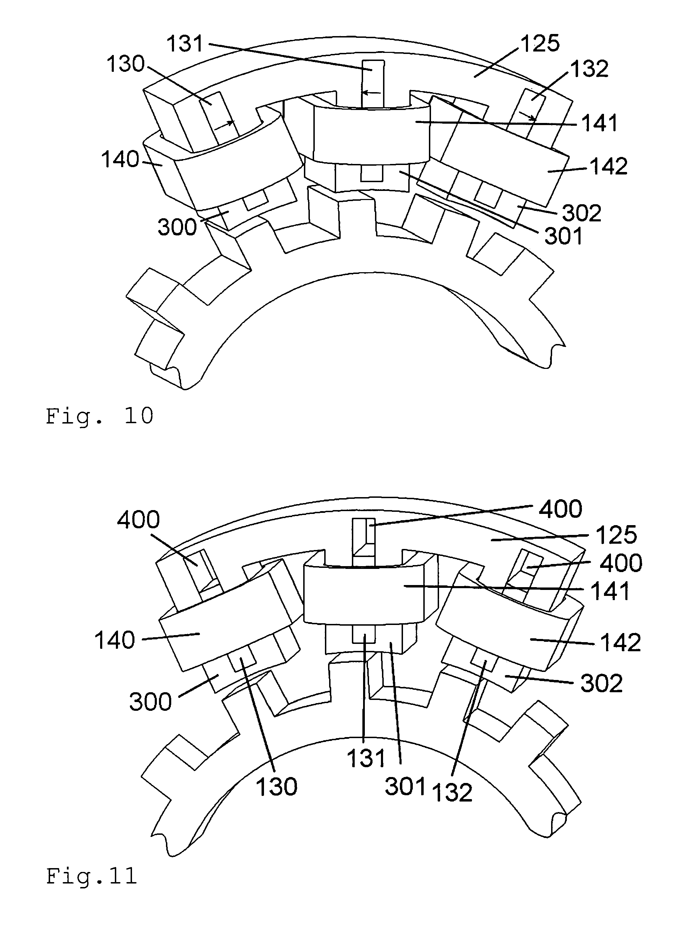

In der Figur 10 ist ein Ausführungsbeispiel für einen Generator gezeigt, bei dem die statorseitigen Magnete 130, 131 und 132 entlang der Längsrichtung der Schenkel 300, 301 und 302 des flussführenden statorseitigen Elements 125 ausgerichtet sind. Bei dieser Ausgestaltung kommt es bei einer Relativdrehung des Rotors relativ zum Stator zu einem Wechsel der Feldlinienrichtung innerhalb der Schenkel und somit zu einem Phasenwechsel der in den statorseitigen Spulen 140, 141 und 142 induzierten elektrischen Spannungen.

Die Figur 11 zeigt ein Ausführungsbeispiel für einen Generator 60, bei dem in den Schenkeln 300, 301 und 302 des flussführenden statorseitigen Elements 125 Flusssperren 400 integriert sind, die einen besonders hohen magnetischen Widerstand aufweisen. Die Funktion der Flusssperren 400 besteht darin, die magnetischen Feldlinien innerhalb des flussführenden statorseitigen Elements 125 in geeigneter Weise derart zu führen, dass ein möglichst großer Effizienzgrad erreicht wird.

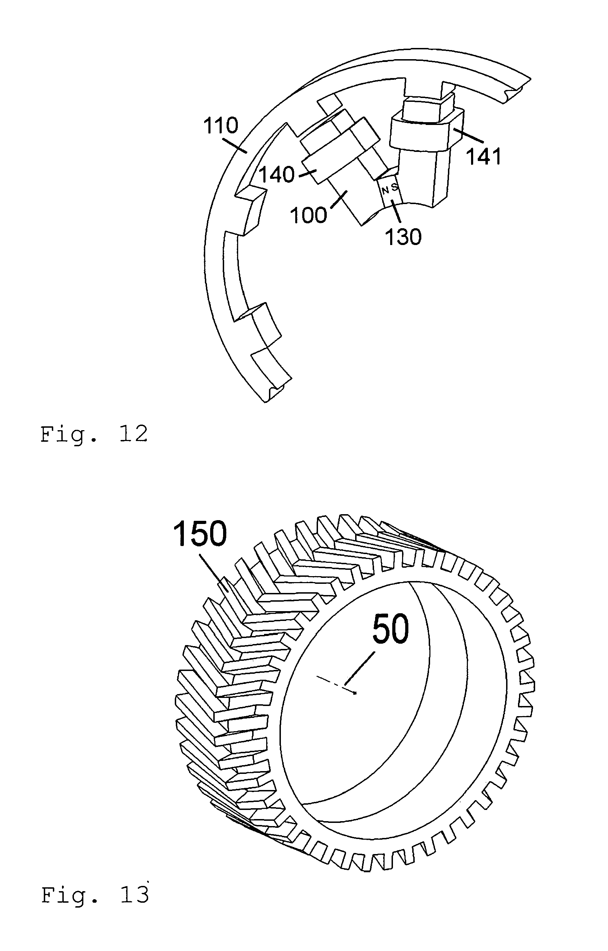

In der Figur 12 ist stellvertretend für alle beispielhaften Ausführungen in Figur 2 bis 11 die Möglichkeit dargestellt, einen Generator 60 nach Figur 1 so zu gestalten, dass sich der rotorseitige Abschnitt 110 außen um den statorseitigen Abschnitt 100 bewegen kann. Alle Ausführungsvarianten nach Figur 3 bis 11 lassen sich als Außenläufer ausführen.

In der Figur 13 ist beispielhaft dargestellt, dass die Zähne 150 nicht unbedingt parallel zur Rotationsachse 50 gemäß Figur 1 verlaufen müssen. So ist ersichtlich, dass bei dem Ausführungsbeispiel gemäß Figur 11 ein schräger Verlauf der Zähne 150 des Rotors vorgesehen ist; denn die Zähne 150 verlaufen schräg bzw. winklig zur Rotationsachse 50 des Rotors.

In entsprechender Weise können auch die Schenkel des oder der flussführenden statorseitigen Elemente 125 schräg bzw. winklig zur Rotationsachse 50 des Generators ausgerichtet sein.

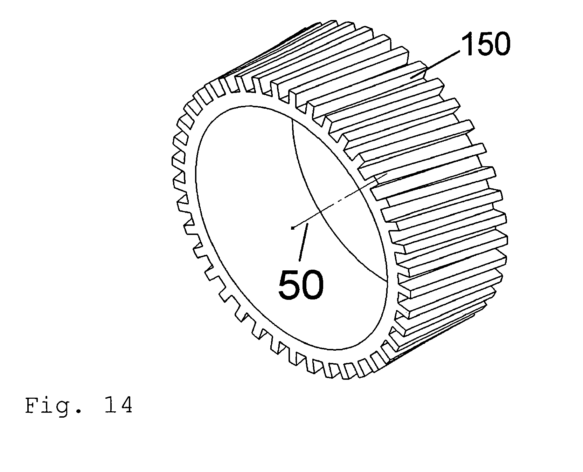

Die Figur 14 zeigt beispielhaft eine Formgestaltung der Zähne mit Schrägung, bei der die Zähne eine Pfeilschräge aufweisen. So ist jeweils ein Abschnitt eines jeden Zahns von der Rotationsachse wegorientiert, wohingegen ein sich daran anschließender weiterer Abschnitt des jeweiligen Zahns wieder zur Rotationsachse hinorientiert ist, so dass - entlang der Rotationssachse gesehen - eine insgesamt pfeilförmige Struktur pro Zahn gebildet wird.

### Bezugszeichenliste

- 10: Windenergieanlage
- 20: Energieübertragungsnetz
- 30: Propeller
- 40: Flügel
- 50: Achse
- 60: Generator
- 100: statorseitiger Abschnitt
- 110: rotorseitiger Abschnitt
- 120: magnetischer Kreis
- 125: statorseitiges Element
- 126: Bodenbereich
- 130: Magnet
- 131: Magnet
- 132: Magnet
- 140: statorseitige Spule
- 141: statorseitige Spule
- 142: statorseitige Spule
- 150: Zähne
- 160: Spalte
- 200: Schenkelenden
- 210: Schenkelenden
- 300: Schenkel
- 301: Schenkel
- 302: Schenkel
- 400: Flusssperre

- I: Strom
- Rm: Widerstand

## Patentansprüche

1. Wind- oder Wasserenergieanlage (10) zum Erzeugen elektrischer Energie mit mindestens einem Propeller (30) und mindestens einem Generator (60), der mindestens einen Rotor, mindestens einen Stator und mindestens ein einen magnetischen Fluss hervorrufenden magnetischen Kreis (120) umfasst, **dadurch gekennzeichnet, dass**
- der mindestens eine magnetische Kreis zumindest einen statorseitigen Magneten (130, 131, 132) und zumindest eine statorseitige Spule (140, 141, 142), die von zumindest einem Teil des magnetischen Flusses des statorseitigen Magneten durchflossen wird, umfasst und der magnetische Kreis durch den Rotor geschlossen wird und
- der Rotor auf seiner dem Stator zugewandeten Oberfläche einen von seinem jeweiligen Rotationswinkel abhängigen magnetischen Widerstand (Rm) aufweist, so dass die Größe des magnetischen Flusses in der zumindest einen statorseitigen Spule von dem jeweiligen Rotationswinkel des Rotors abhängig ist und sich bei Rotation des Rotors ändert.

2. Wind- oder Wasserenergieanlage nach Anspruch 1,
**dadurch gekennzeichnet, dass**
der Propeller mit dem Rotor des Generators drehfest verbunden ist.

3. Wind- oder Wasserenergieanlage nach einem der voranstehenden Ansprüche,
**dadurch gekennzeichnet, dass**
der zumindest eine statorseitige Magnet ein Permanentmagnet ist.

4. Wind- oder Wasserenergieanlage nach einem der voranstehenden Ansprüche 1-2,
**dadurch gekennzeichnet, dass**
der zumindest eine statorseitige Magnet ein Elektromagnet ist.

5. Wind- oder Wasserenergieanlage nach einem der voranstehenden Ansprüche,
**dadurch gekennzeichnet, dass**
der Stator an seiner dem Rotor zugewandten Fläche eine Vielzahl an magnetischen Kreisen aufweist, die jeweils zumindest einen statorseitigen Magneten und jeweils zumindest eine statorseitige Spule umfassen und die jeweils durch den Rotor geschlossen werden.

6. Wind- oder Wasserenergieanlage nach einem der voranstehenden Ansprüche,
**dadurch gekennzeichnet, dass**
die Anordnung der magnetischen Kreise auf dem Stator drehsymmetrisch ist.

7. Wind- oder Wasserenergieanlage nach einem der voranstehenden Ansprüche,
**dadurch gekennzeichnet, dass**
der Rotor auf seiner dem Stator zugewandeten Oberfläche bezüglich der örtlichen Verteilung seines magnetischen Widerstands drehsymmetrisch ausgeführt ist.

8. Wind- oder Wasserenergieanlage nach einem der voranstehenden Ansprüche 6-7,
**dadurch gekennzeichnet, dass**
der Drehsymmetriewinkel der Anordnung der magnetischen Kreise auf dem Stator und der Drehsymmetriewinkel der örtlichen Verteilung des magnetischen Widerstands des Rotors unterschiedlich sind.

9. Wind- oder Wasserenergieanlage nach einem der voranstehenden Ansprüche,
**dadurch gekennzeichnet, dass**
der Rotor auf seiner dem Stator zugewandeten Oberfläche sich radial nach außen erstreckende Zähne (150) aufweist.

10. Wind- oder Wasserenergieanlage nach Anspruch 9,
**dadurch gekennzeichnet, dass**
der Rotor sich auch außen um den Stator drehen kann.

11. Wind- oder Wasserenergieanlage nach einem der voranstehenden Ansprüche 9-10,
**dadurch gekennzeichnet, dass**
der Zwischenraum zwischen benachbarten Zähnen ganz oder teilweise mit einem Material gefüllt ist, das einen größeren magnetischen Widerstand als das Material der Zähne aufweist.

12. Wind- oder Wasserenergieanlage nach einem der voranstehenden Ansprüche,
**dadurch gekennzeichnet, dass**
der statorseitige Abschnitt des mindestens einen magnetischen Kreises ein flussführendes statorseitiges Element (125), das durch die zumindest eine statorseitige Spule hindurchgeführt ist, aufweist, wobei die Querschnittsfläche des flussführenden Elements kleiner als die Querschnittsfläche des statorseitigen Magneten ist.

13. Wind- oder Wasserenergieanlage nach einem der voranstehenden Ansprüche,
**dadurch gekennzeichnet, dass**
der statorseitige Abschnitt des mindestens einen magnetischen Kreises ein flussführendes statorseitiges Element (125), das durch die zumindest eine statorseitige Spule hindurchgeführt ist, aufweist, wobei die Querschnittsfläche des flussführenden Elements im Spulenbereich kleiner als die Querschnittsfläche von Schenkelenden (200, 210) des Elements (125), die die Schnittstelle zum Rotor bilden.

14. Wind- oder Wasserenergieanlage nach einem der voranstehenden Ansprüche,
**dadurch gekennzeichnet, dass**
die statorseitigen Abschnitte der magnetischen Kreise jeweils mit mindestens einer magnetischen Flusssperre (400) versehen sind.

15. Wind- oder Wasserenergieanlage nach einem der voranstehenden Ansprüche,
**dadurch gekennzeichnet, dass**
der oder die statorseitigen Magnete im flussführenden Material des Stators eingebettet sind.

## Geänderte Patentansprüche

### Geänderte Patentansprüche gemäss Regel 137(2) EPÜ.

**1.** Wind- oder Wasserenergieanlage (10) zum Erzeugen elektrischer Energie mit mindestens einem Propeller (30) und mindestens einem Generator (60), der mindestens einen Rotor, mindestens einen Stator und mindestens ein einen magnetischen Fluss hervorrufenden magnetischen Kreis (120) umfasst,
wobei
- der mindestens eine magnetische Kreis zumindest einen statorseitigen Magneten (130, 131, 132) und zumindest eine statorseitige Spule (140, 141, 142), die von zumindest einem Teil des magnetischen Flusses des statorseitigen Magneten durchflossen wird, umfasst und der magnetische Kreis durch den Rotor geschlossen wird und
- der Rotor auf seiner dem Stator zugewandeten Oberfläche einen von seinem jeweiligen Rotationswinkel abhängigen magnetischen Widerstand (Rm) aufweist, so dass die Größe des magnetischen Flusses in der zumindest einen statorseitigen Spule von dem jeweiligen Rotationswinkel des Rotors abhängig ist und sich bei Rotation des Rotors ändert,
**dadurch gekennzeichnet, dass**
der oder die statorseitigen Magnete im flussführenden Material des Stators eingebettet sind.

**2.** Wind- oder Wasserenergieanlage nach Anspruch 1,
**dadurch gekennzeichnet, dass**
der Propeller mit dem Rotor des Generators drehfest verbunden ist.

**3.** Wind- oder Wasserenergieanlage nach einem der voranstehenden Ansprüche,
**dadurch gekennzeichnet, dass**
der zumindest eine statorseitige Magnet ein Permanentmagnet ist.

**4.** Wind- oder Wasserenergieanlage nach einem der voranstehenden Ansprüche 1-2,
**dadurch gekennzeichnet, dass**
der zumindest eine statorseitige Magnet ein Elektromagnet ist.

**5.** Wind- oder Wasserenergieanlage nach einem der voranstehenden Ansprüche,
**dadurch gekennzeichnet, dass**
der Stator an seiner dem Rotor zugewandten Fläche eine Vielzahl an magnetischen Kreisen aufweist, die jeweils zumindest einen statorseitigen Magneten und jeweils zumindest eine statorseitige Spule umfassen und die jeweils durch den Rotor geschlossen werden.

**6.** Wind- oder Wasserenergieanlage nach einem der voranstehenden Ansprüche,
**dadurch gekennzeichnet, dass**
die Anordnung der magnetischen Kreise auf dem Stator drehsymmetrisch ist.

**7.** Wind- oder Wasserenergieanlage nach einem der voranstehenden Ansprüche,
**dadurch gekennzeichnet, dass**
der Rotor auf seiner dem Stator zugewandeten Oberfläche bezüglich der örtlichen Verteilung seines magnetischen Widerstands drehsymmetrisch ausgeführt ist.

**8.** Wind- oder Wasserenergieanlage nach einem der voranstehenden Ansprüche 6-7,
**dadurch gekennzeichnet, dass**
der Drehsymmetriewinkel der Anordnung der magnetischen Kreise auf dem Stator und der Drehsymmetriewinkel der örtlichen Verteilung des magnetischen Widerstands des Rotors unterschiedlich sind.

**9.** Wind- oder Wasserenergieanlage nach einem der voranstehenden Ansprüche,
**dadurch gekennzeichnet, dass**
der Rotor auf seiner dem Stator zugewandeten Oberfläche sich radial nach außen erstreckende Zähne (150) aufweist.

**10.** Wind- oder Wasserenergieanlage nach Anspruch 9,
**dadurch gekennzeichnet, dass**
der Rotor sich auch außen um den Stator drehen kann.

**11.** Wind- oder Wasserenergieanlage nach einem der voranstehenden Ansprüche 9-10,
**dadurch gekennzeichnet, dass**
der Zwischenraum zwischen benachbarten Zähnen ganz oder teilweise mit einem Material gefüllt ist, das einen größeren magnetischen Widerstand als das Material der Zähne aufweist.

**12.** Wind- oder Wasserenergieanlage nach einem der voranstehenden Ansprüche,
**dadurch gekennzeichnet, dass**
der statorseitige Abschnitt des mindestens einen magnetischen Kreises ein flussführendes statorseitiges Element (125), das durch die zumindest eine statorseitige Spule hindurchgeführt ist, aufweist, wobei die Querschnittsfläche des flussführenden Elements kleiner als die Querschnittsfläche des statorseitigen Magneten ist.

**13.** Wind- oder Wasserenergieanlage nach einem der voranstehenden Ansprüche,
**dadurch gekennzeichnet, dass**
der statorseitige Abschnitt des mindestens einen magnetischen Kreises ein flussführendes statorseitiges Element (125), das durch die zumindest eine statorseitige Spule hindurchgeführt ist, aufweist, wobei die Querschnittsfläche des flussführenden Elements im Spulenbereich kleiner als die Querschnittsfläche von Schenkelenden (200, 210) des Elements (125), die die Schnittstelle zum Rotor bilden.

**14.** Wind- oder Wasserenergieanlage nach einem der voranstehenden Ansprüche,
**dadurch gekennzeichnet, dass**
die statorseitigen Abschnitte der magnetischen Kreise jeweils mit mindestens einer magnetischen Flusssperre (400) versehen sind.
